(19) **Europäisches Patentamt**

**European Patent Office**

**Office européen des brevets**

(11) **EP 1 026 890 A2**

(12) **EUROPEAN PATENT APPLICATION**

(43) Date of publication:
**09.08.2000 Bulletin 2000/32**

(51) Int Cl.7: **H04N 5/76**

(21) Application number: **00101988.4**

(22) Date of filing: **01.02.2000**

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI** | (71) Applicant: **Pioneer Corporation<br>Meguro-ku, Tokyo (JP)** |
| (30) Priority: **02.02.1999  JP  2530499** | (72) Inventor: **Higuchi, Ichirou<br>4-chome, Tokorozawa-shi, Saitama-ken (JP)** |
| | (74) Representative: **Viering, Jentschura & Partner<br>Postfach 22 14 43<br>80504 München (DE)** |

(54) **Information recording and reproducing apparatus, and information recording and reproducing method**

(57)    An information recording and reproducing apparatus (S) is provided with: an information recording device (R) for processing information inputted from an external portion at a predetermined input rate, to thereby generate record information and for recording the generated record information onto a record medium (1) at a record rate higher than the input rate; an information reproducing device (P) for detecting the record information at a predetermined detection rate for reprocessing the detected record information to thereby reproduce the record information, and for outputting the reprocessed record information to the external portion at an output rate lower than the detection rate; and a controller (14) for respectively controlling the information recording device and the information reproducing device such that, in a time duration during which the record information is not recorded and which is caused by a difference between the record rate and the input rate, the record information already recorded on the record medium until a present time is reproduced while the information from the external portion is continued to be inputted, and such that, in a time duration during which the record information is not detected and which is caused by a difference between the detection rate and the output rate, the record information which is not recorded yet is recorded onto the record medium while the reprocessed record information is continued to be outputted to the external portion.

FIG. 1

EP 1 026 890 A2

**Description**

BACKGROUND OF THE INVENTION

1. Field of the Invention

The present invention relates to an information recording and reproducing apparatus, and an information recording and reproducing method, which can both reproduce information from a record medium and record information onto the record medium, and more particularly relates to a control to reproduce and record the information.

2. Description of the Related Art

Conventionally, a so-called VTR (Video Tape Recorder) is widely generalized as an information recording and reproducing apparatus which can both record and reproduce information such as an image and the like.

Here, the number of heads to carry out the recording and reproducing operation is one in the conventional VTR. It is designed so as to use the head to record and reproduce information onto and from one vide tape.

However, in the configuration of the conventional VTR, since the single head is used to record and reproduce information, it is impossible to simultaneously record and reproduce the information.

Hence, for example, when it is tried to reproduce information recorded until that time from the beginning thereof while recording information, it is necessary to stop the recording operation at that time and then reproduce it from the beginning, or it is necessary to reproduce it after completing the record of all information.

In this case, if the recording operation is stopped in the middle, the information after that cannot be recorded. Or, if waiting for the completion of the recording operation, it is impossible to reproduce it when desiring the reproduction.

Moreover, in the configuration of the conventional VTR, a so-called quick traverse reproduction (i.e., a fast forward reproduction) cannot be carried out in parallel to the recording operation.

SUMMARY OF THE INVENTION

The present invention is proposed in view of the above mentioned problems. It is therefore an object of the present invention to provide an apparatus for and a method of recording and reproducing information onto and from one record medium, which can simultaneously carry out recording and reproducing operations and further carry out a quick traverse reproduction (i.e., a fast forward reproduction) during the recording operation to thereby improve its convenience.

The above object of the present invention can be achieved by an information recording and reproducing apparatus provided with: an information recording device for processing information inputted from an external portion at a predetermined input rate, which is set in advance, to thereby generate record information and for recording the generated record information onto a record medium such as an optical disc or the like at a record rate higher than the input rate; an information reproducing device for detecting the record information recorded on the record medium at a predetermined detection rate, which is set in advance, for reprocessing the detected record information to thereby reproduce the record information, and for outputting the reprocessed record information to the external portion at an output rate lower than the detection rate; and a controller such as a CPU or the like for respectively controlling the information recording device and the information reproducing device such that, in a time duration during which the record information is not recorded and which is caused by a difference between the record rate and the input rate, the record information already recorded on the record medium until a present time is reproduced while the information from the external portion is continued to be inputted, and such that, in a time duration during which the record information is not detected and which is caused by a difference between the detection rate and the output rate, the record information which is not recorded yet is recorded onto the record medium while the reprocessed record information is continued to be outputted to the external portion. The controller controlling the information reproducing device to detect a plurality of partial record information, each of which is a part of the record information recorded on the record medium and which are discontinuous to each other in the record information, and reproduce the plurality of detected partial record information continuously to each other in an order along a time axis in the record information.

According to the information recording and reproducing apparatus of the present invention, since the record information which is already recorded on the record medium until the present time is continuously reproduced while the input of the information from the external portion is continued and since the non-recorded record information is recorded while the output of the detected record information to the external portion is continued, it is possible to apparently perform both recording the information and reproducing the record information recorded until the present time, at the same time.

Further, since the information reproducing device is controlled such that the plurality of partial record information which are discontinuous to each other in the record information on the record medium are detected and since the plurality of the detected partial information are reproduced continuously to each other in the order along the time axis in the record information, it is possible to perform the quick traverse reproduction by the intermittent reproduction of the record information while both recording the information and reproducing the partial record information.

Consequently, it is possible to improve the convenience of the information recording and reproducing apparatus.

In one aspect of the information recording and reproducing apparatus of the present invention, the information recording device comprises: a processing device such as a compression circuit or the like for processing the information inputted at the input rate to thereby generate the record information; a record information memory such as a recording buffer memory or the like for temporarily storing the generated record information; and a recording device such as an optical pickup or the like for reading out the stored record information and recording the read out record information onto the record medium at the record rate. The controller controls the information recording device to continue receiving the information from the external portion and controlling the information reproducing device to detect the plurality of partial record information already recorded on the record medium until a present time and to continuously reproduce the plurality of detected partial record information, in a time duration during which the record information is stored in the record information memory and the record information is not recorded onto the record medium.

According to this aspect, since the partial record information, which is already recorded until the present time in the operation of recording into the record information memory, is detected, it is possible to perform simultaneously the recording operation of the information and the quick traverse reproduction by means of a relatively simple configuration.

In another aspect of the information recording and reproducing apparatus of the present invention, the information reproducing device comprises: a detecting device such as an optical pickup or the like for detecting the partial record information at the detection rate from the record medium; a partial-record information memory such as a reproduction buffer memory or the like for temporarily storing the detected partial record information; and a reprocessing device such as a demodulating circuit or the like for reading out the stored partial record information and reprocessing the read out partial record information to thereby reproduce the record information and for outputting the reprocessed record information to the external portion at the output rate, the controller controlling the information reproducing device to continue outputting the reprocessed record information to the external portion and controlling the information recording device to record the record information not recorded yet onto the record medium, in a time duration during which the partial record information is read out from the partial-record information memory and is reprocessed to be thereby continuously reproduced and a detection of the partial record information from the record medium is not performed.

According to this aspect, since the record information is recorded while the partial record information is being read out from the partial-record information memory, it is possible to perform simultaneously the recording operation of the information and the quick traverse reproduction by means of a relatively simple configuration.

In another aspect of the information recording and reproducing apparatus of the present invention, the controller controls the information reproducing device by setting the number and a detection interval of the partial record information to be detected on the basis of the record rate and the detection rate.

According to this aspect, since the number and the detection interval of the partial record information to be detected are set on the basis of the record rate and the detection rate, it is possible to perform the quick traverse reproduction of the partial record information in a natural manner without causing an overflow of the record information memory or the partial-record information memory.

Alternatively, in the above mentioned aspect having the record information memory, the controller may control the information reproducing device by setting the number and a detection interval of the partial record information to be detected on the basis of the record rate, the detection rate and a storage amount of the record information in the record information memory.

According to this aspect, since the number and the detection interval of the partial record information to be detected are set on the basis of the record rate, the detection rate and a storage amount of the record information in the record information memory, it is possible to perform the quick traverse reproduction of the partial record information in a natural manner without causing an overflow of the record information memory.

Further alternatively, in the above mentioned aspect having the partial-record information memory, the controller controls the information reproducing device by setting the number and a detection interval of the partial record information to be detected on the basis of the record rate, the detection rate and a storage amount of the record information memory or the partial record information in the partial-record information memory.

According to this aspect, since the number and the detection interval of the partial record information to be detected are set on the basis of the record rate, the detection rate and a storage amount of the partial record information in the partial-record information memory, it is possible to perform the quick traverse reproduction of the partial record information in a natural manner without causing an overflow of the record information memory or the partial-record information memory.

The above object of the present invention can be also achieved by an information recording and reproducing method comprising: an information recording process of processing information inputted from an external portion at a predetermined input rate, which is set in advance, to thereby generate record information and of recording the generated record information onto a record medium at a record rate higher than the input rate; an information reproducing process of detecting the record information recorded on the record medium at a predetermined detection rate, which is set in advance, of reprocessing the detected record information to thereby reproduce the record information, and of outputting the reprocessed record information to the external portion at an output rate lower than the detection rate; and a controlling process of respectively controlling the information recording process and the information reproducing process such that, in a time duration during which the record information is not recorded and which is caused by a difference between the record rate and the input rate, the record information already recorded on the record medium until a present time is reproduced while the information from the external portion is continued to be inputted, and such that, in a time duration during which the record information is not detected and which is caused by a difference between the detection rate and the output rate, the record information which is not recorded yet is recorded onto the record medium while the reprocessed record information is continued to be outputted to the external portion. The controlling process controls the information reproducing process to detect a plurality of partial record information, each of which is a part of the record information recorded on the record medium and which are discontinuous to each other in the record information, and reproduce the plurality of detected partial record information continuously to each other in an order along a time axis in the record information.

According to the information recording and reproducing method of the present invention, the same advantageous effect of the above described information recording and reproducing apparatus of the invention can be achieved.

In one aspect of the information recording and reproducing method of the present invention, the information recording process comprises: a processing process of processing the information inputted at the input rate to thereby generate the record information; a record information storing process of temporarily storing the generated record information; and a recording process of reading out the stored record information and recording the read out record information onto the record medium at the record rate. The controlling process controls the information recording process to continue receiving the information from the external portion and controlling the information reproducing process to detect the plurality of partial record information already recorded on the record medium until a present time and to continuously reproduce the plurality of detected partial record information, in a time duration during which the record information is stored by the record information storing process and the record information is not recorded onto the record medium.

In another aspect of the information recording and reproducing method of the present invention, the information reproducing process comprises: a detecting process of detecting the partial record information at the detection rate from the record medium; a partial-record information storing process of temporarily storing the detected partial record information; and a reprocessing process of reading out the stored partial record information and reprocessing the read out partial record information to thereby reproduce the record information and of outputting the reprocessed record information to the external portion at the output rate. The controlling process controls the information reproducing process to continue outputting the reprocessed record information to the external portion and controlling the information recording process to record the record information not recorded yet onto the record medium, in a time duration during which the partial record information is read out by the partial-record information storing process and is reprocessed to be thereby continuously reproduced and a detection of the partial record information from the record medium is not performed.

In another aspect of the information recording and reproducing method of the present invention, the controlling process controls the information reproducing process by setting the number and a detection interval of the partial record information to be detected on the basis of the record rate and the detection rate.

Alternatively, in another aspect of the information recording and reproducing method of the present invention, having the record information storing process, the controlling process controls the information reproducing process by setting the number and a detection interval of the partial record information to be detected on the basis of the record rate, the detection rate and a storage amount of the record information by the record information storing process.

Further alternatively, in another aspect of the information recording and reproducing method of the present invention, having the partial-record information storing process, the controlling process controls the information reproducing process by setting the number and a detection interval of the partial record information to be detected on the basis of the record rate, the detection rate and a storage amount of the partial record information by the partial-record information storing process.

According to the various aspects of the information recording and reproducing method of the present invention, the same advantageous effects of the above described various aspects of the information recording and reproducing apparatus of the invention can be respectively achieved.

The nature, utility, and further features of this invention will be more clearly apparent from the following detailed description with respect to preferred embodiments of the invention when read in conjunction with the accompanying drawings briefly described below.

BRIEF DESCRIPTION OF THE DRAWINGS

FIG.1 is a block diagram showing a schematic configuration of an information recording and reproducing apparatus in an embodiment;
FIG.2 is a flowchart showing an operation of the information recording and reproducing apparatus in the embodiment;
FIG.3 is a diagram showing the changes of accumulated data amounts in respective buffer memories;
FIG.4 is a flowchart ( I ) showing an operation at a time of a quick traverse reproduction;
FIG.5 is a flowchart (II) showing an operation at a time of a quick traverse reproduction; and
FIG.6 is a timing chart showing an operation at a time of a quick traverse reproduction.

DETAILED DESCRIPTION OF THE PREFERRED EMBODIMENTS

A preferred embodiment of the present invention will be explained below with reference to the drawings. The following embodiment is an embodiment in which the present invention is applied to an information recording and reproducing apparatus which can record and reproduce information onto and from a record medium in a form of a disc onto and from which the information can be optically recorded and reproduced (hereafter, which is merely referred to as an optical disc).

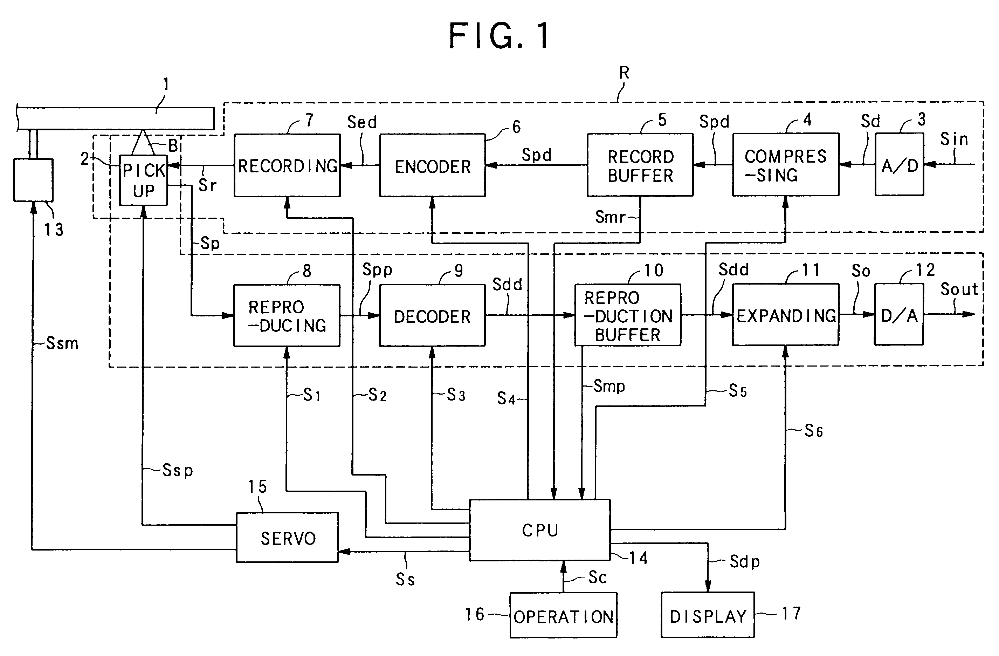

At first, the configuration of the information recording and reproducing apparatus according to the embodiment is described with reference to FIG.1.

As shown in FIG.1, an information recording and reproducing apparatus S in the embodiment is provided with an optical pickup 2 serving as a recorder and a reproducing unit, an A/D (Analog/Digital) converter 3, a compressing circuit 4 serving as a processor, a record buffer memory 5 serving as a record information memory, an encoder 6, a recording circuit 7, a reproducing circuit 8, a decoder 9, a reproduction buffer memory 10 serving as a memory, an expanding circuit 11 serving as a re-processor, a D/A (Digital/Analog) converter 12, a spindle motor 13, a CPU 14 serving as a controller, a servo circuit 15, an operation unit 16 and a display 17.

In the above-mentioned configuration, the optical pickup 2, the A/D converter 3, the compressing circuit 4, the record buffer memory 5, the encoder 6 and the recording circuit 7 constitute an information recorder R serving as an information recording device.

Also, the optical pickup 2, the reproducing circuit 8, the decoder 9, the reproduction buffer memory 10, the expanding circuit 11 and the D/A converter 12 constitute an information reproducing unit P serving as an information reproducing device.

Each schematic operation of the respective constitutional elements will be described below.

At first, a case is described in which the information to be recorded from the external portion is recorded onto an optical disc 1 serving as a record medium.

When an information signal Sin (an analog signal) corresponding to the information to be recorded from the external portion (for example, the information to be recorded, which actually includes video information and/or audio information) is inputted at a predetermined input rate Mr, the A/D converter 3 digitizes the information signal Sin, generates a digital information signal Sd, and outputs it to the compressing circuit 4.

Then, the compressing circuit 4 compresses the input digital information signal Sd in accordance with a control signal S5 outputted by the CPU 14, and then generates a compressed information signal Spd, and further outputs it to the record buffer memory 5. At this time, when the digital information signal Sd is compressed, a compression method, such as, for example, an MPEG2 (Moving Picture coding Experts Group 2) and the like, is used

Next, the record buffer memory 5 transiently stores the input compressed information signals Spd as it is. At this time, the record buffer memory 5 always outputs it to the CPU 14 a data amount signal Smr indicative of the accumulated compressed information signals Spd.

Next, the encoder 6, in accordance with a control signal S4 outputted by the CPU 14, reads out the compressed information signals Spd transiently stored in the record buffer memory 5, at a record rate Rr higher than the input rate Mr of the information signal Sin, and encodes it, and then generates an encoded signal Sed, and further outputs it to the recording circuit 7.

Then, the recording circuit 7, in accordance with a control signal S2 outputted by the CPU 14, converts the input encoded signal Sed into a record signal Sr for recording, and then outputs it to the optical pickup 2. At this time, the recording circuit 7 performs a so-called write strategy process and the like on the encoded signal Sed, in order to form the pits having the shape accurately corresponding to the information to be recorded, on the later-described optical disc 1.

Then, the optical pickup 2, in accordance with the record signal Sr outputted by the recording circuit 7, drives a light source of a semiconductor laser (not shown) in the optical pickup 2 or the like, and generates a light beam B, such as a laser light or the like, and then irradiates it onto an information record surface of the optical disc 1. Namely, the optical pickup 2 generates the pits corresponding to the record signal Sr, to thereby record the information signal Sin onto the optical disc 1 at a speed corresponding to the record rate Rr. At this time, the optical disc 1 is rotated at a predetermined rotation number by the spindle motor 13 driven in accordance with a later-described spindle control signal Ssm. In addition, the information signal Sin is recorded onto the optical disc 1 as the pits corresponding to the record signal Sr are formed by using, for example, a phase changing method.

Next, the operation in reproducing the information recorded on the optical disc 1 will be described below.

At the time of the reproduction, the optical pickup 2 firstly irradiates the light beam B for the reproduction, onto the rotated optical disc 1, and then outputs at a detection rate Rp a detection signal Sp corresponding to the pits formed on the optical disc 1 in accordance with its reflection light, and further outputs it to the reproducing circuit 8.

The reproducing circuit 8, in accordance with a control signal S1 outputted by the CPU 14, amplifies the output detection signal Sp at a predetermined amplification factor, and also reshapes its wave form, and then generates a reproduction signal Spp, and further outputs it to the decoder 9.

The decoder 9, in accordance with a control signal S3 outputted by the CPU 14, decodes the reproduction signal Spp by using a decoding method corresponding to the encoding method in the encoder 6, generates a decoded signal Sdd, and outputs it to the reproduction buffer memory 10 at a speed corresponding to the detection rate Rp.

The reproduction buffer memory 10 transiently stores the input decoded signals Sdd as it is. At this time, it always outputs to the CPU 14 a data amount signal Smp indicative of a data amount of the accumulated decoded signals Sdd.

Next, the expanding circuit 11, in accordance with a control signal S6 outputted by the CPU 14, reads out the decoded signals Sdd transiently stored in the reproduction buffer memory 10, at an output rate Mp lower than the detection rate Rp of the detection signal Sp, and then performs an expanding process corresponding to the compressing process in the compressing circuit 4 on the read out decoded signals Sdd, and further generates an expanded signal So and outputs to the D/A converter 12.

Then, the D/A converter 12 converts the expanded signal So into analog, generates an output signal Sout corresponding to the information signal Sin, and then outputs it to the external portion.

Associated with the above-mentioned operations of recording and reproducing the information, the CPU 14, in accordance with the data amount signal Smp or Smr, outputs the respective control signals S1 to S6, respectively, so as to carry out the processes shown in the later-described flowcharts. At this time, the operation unit 16 outputs to the CPU 14 a command signal Sc corresponding to an operation carried out by a user or the like. The CPU 14 respectively outputs the respective control signals S1 to S6 in accordance with the command signal Sc.

In parallel to this, the CPU 14 generates a control signal Ss for performing servo control on the spindle motor 13 and the optical pickup 2, and then outputs it to the servo circuit 15. The servo circuit 15, in accordance with the control signal Ss, generates the spindle control signal Ssm for controlling the rotation of the spindle motor 13, and then outputs it to the spindle motor 13. The servo circuit 15 also generates a pickup control signal Ssp for the sake of so-called tracking servo control and focus servo control in the optical pickup 2, and then outputs it to the optical pickup 2. The optical pickup 2 records the record signal Sr (i.e., the information signal Sin) or detects the detection signal Sp while performing the tracking servo control and the focus servo control for the light beam B, in accordance with the pickup control signal Ssp.

In addition, the information required when the user controls the operation of the information recording and reproducing apparatus S is displayed on the display 17 in accordance with a display signal Sdp from the CPU 14.

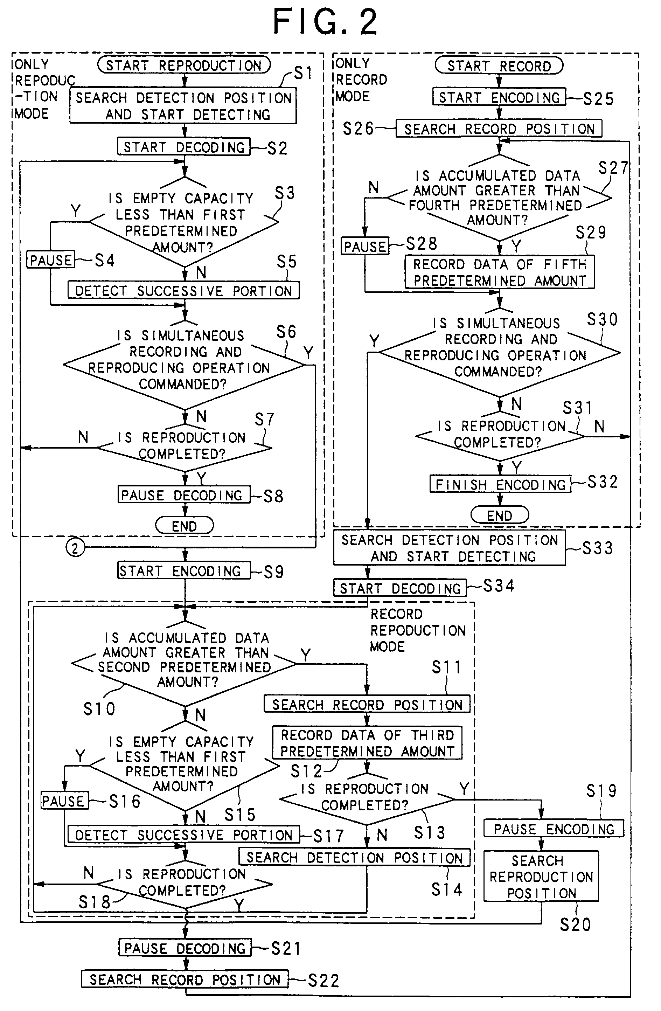

Next, the recording and reproducing operation in the information recording and reproducing apparatus S having the above-mentioned configuration will be described below with reference to FIG.2. In FIG.2, processes when only the operation of reproducing information is carried out are shown in steps S1 to S8, processes when only the operation of recording information is carried out are shown in steps S25 to S32, and processes when the operation of simultaneously (i.e., apparently simultaneously) recording and reproducing the information is carried out are shown in steps S10 to S18.

At first, the operation is described when the simultaneous record is commanded while an information is originally reproduced.

In the information recording and reproducing apparatus S, a position on the optical disc 1 at which a record signal Sr to be reproduced is recorded is firstly searched when the information reproduction from the optical disc 1 is commanded. A light spot of a light beam B is moved to the searched position, and then the generation of a detection signal Sp is started at the detection rate Rp (Step S1). After that, the decoder 9 starts decoding the generated detection signal Sp (Step S2). When this decoding operation is started, decoded signals Sdd are accumulated in the reproduction buffer memory 10 at a speed corresponding to the detection rate Rp.

Then, the CPU 14 judges whether or not an empty capacity of the reproduction buffer memory 10 becomes equal to or less than a preset first predetermined amount, in accordance with a data amount signal Smp from the reproduction buffer memory 10 (Step S3). Here, the first predetermined amount is used as a minimum decode unit of the decoded signal Sdd (for example, a data amount equal to one ECC (Error Collecting Code) block in the decoded signal Sdd).

If it is judged in the judgment at the step S3 that the empty amount of the reproduction buffer memory 10 becomes equal to or less than the first predetermined amount (Step S3 ; yes), the optical pickup 2 is transiently paused since the reproduction buffer memory 10 becomes full if the generation of the detection signals Sp is further continued, and the generation of the detection signals Sp is paused (Step S4). The operational flow proceeds to the step S6.

On the other hand, if it is judged in the judgment at the step S3 that the empty capacity of the reproduction buffer memory 10 is not equal to or less than the first predetermined amount (Step S3 ; no), the record signals Sr are successively detected to generate the detection signals Sp (Step S5). Then, the CPU 14 judges whether or not the information record during the reproduction is commanded through the operation unit 16 (Step S6).

If the information record during the reproduction is not commanded (Step S6 ; no), it is then judged whether or not all the information to be reproduced are reproduced (Step S7). If the reproduction of all the information is completed (Step S7 ; yes), the decoding operation in the decoder 9 is paused (Step S8), and the information reproducing process is ended.

On the other hand, if it is judged in the judgment at the step S7 that the reproduction is not completed (Step S7 ; no), the operational flow returns back to the step S3. The above-mentioned information reproducing process is repeated.

If the information record during the reproduction is commanded in the judgment at the step S6 (Step S6 ; yes), the compressed information signals Spd transiently recorded in the record buffer memory 5 are read out at the record rate Rr (the A/D conversion of the input information signal Sin in the A/D converter 3 and the compressing process in the compressing circuit 4 are carried out immediately after the information record during the reproduction is commanded at the step S6, and the compressed information signals Spd are accumulated in the record buffer memory 5 at the speed corresponding to the input rate Mr), and also the encoder 6 starts encoding the compressed information signals Spd (Step S9).

Next, the CPU 14 judges whether or not the accumulated data amount of the record buffer memory 5 exceeds a preset second predetermined amount, in accordance with the data amount signal Smr from the record buffer memory 5 (Step S10). If the accumulated data amount exceeds the second predetermined amount (Step S10 ; yes), the generation of the detection signals Sp in the optical pickup 2 until that time is transiently paused (even after this pause, the CPU 14 controls the expanding circuit 11 and the D/A converter 12 so as to continue the D/A conversion and the expansion of the decoded signal Sdds accumulated in the reproduction buffer memory 10 (being carried out at the output rate Mp)). Then, the optical pickup 2 is moved to a position on the optical disc 1 at which the encoded (Step S9) encode signals Sed are recorded (Step S11). After that, a preset third predetermined amount of the encode signals Sed (the record signal Sr) are recorded onto the optical disc 1 through the optical pickup 2 (Step S12).

At this time, the second predetermined amount is set to such a value that the record buffer memory 5 does not become full by it even if the encode signals Sed continue to be accumulated in the record buffer memory 5 at the input rate Mr, before the operation of recording the record signals Sr is started after the completion of the judgment at the step S10 and the movement of the optical pickup 2 at the step S11, on the basis of a capacitance Br of the record buffer memory 5. Also, the third predetermined amount may be equal to the second predetermined amount, or may be a predetermined amount greater than the second predetermined amount in order to exhaust all the encode signals Sed accumulated in the record buffer memory 5 by considering the amount of the encode signals Sed which are newly accumulated in the record buffer memory 5 during recording the record signal Sr.

Then, it is judged whether or not all the record signals Sr to be recorded are recorded (Step S13). If all of them are not recorded (Step S13 ; no), the operation of recording the record signals Sr is transiently paused in the optical pickup 2 (even after this pause, the CPU 14 controls the A/D converter 3 and the compressing circuit 4 so as to continue to accumulate the compressed information signals Spd in the record buffer memory 5 at the input rate Mr). In order to again start generating the detection signals Sp associated with the reduction of the accumulated data amount in the reproduction buffer memory 10, the optical pickup 2 is moved to a position on the optical disc 1 at which a record signal Sr to be next reproduced is recorded (Step S14). Then, the operational flow returns back to the step S10.

On the other hand, if the record of all the record signals Sr is completed in the judgment at the step S13 (Step S13 ; yes), the encoding operation in the encoder 6 is ended (Step S19). Then, the optical pickup 2 is moved to a position on the optical disc 1 on which a record signal Sr to be next detected is recorded, in order to resume the information reproduction (Step S20). Then, the operational flow returns back to the step S3.

If the accumulated data amount in the record buffer memory 5 is not equal to or greater than the second predetermined amount in the judgment at the step S10 (Step S10 ; no), the CPU 14 again judges whether or not the empty capacity of the reproduction buffer memory 10 becomes equal to or less than the first predetermined amount, in accordance with the data amount signal Smp from the reproduction buffer memory 10, in order to continue to successively generate the detection signals Sp while continuing to accumulate the compressed information signals Spd in the record buffer memory 5 (Step S15).

If the empty capacity of the reproduction buffer memory 10 becomes equal to or less than the first predetermined amount (Step S15 ; yes), the optical pickup 2 is transiently paused similarly to the step S4, and the generation of the detection signals Sp is paused (Step S16). Then, the operational flow proceeds to the step S18. Even at this time, it continues to input the information signal Sin, accumulate the compressed information signals Spd in the record buffer memory 5 associated with the input, output the decoded signals Sdd from the reproduction buffer memory 10 and output the output signal Sout from the optical pickup 2 associated with the output.

On the other hand, if the empty capacity of the reproduction buffer memory 10 is not equal to or less than the first predetermined amount in the judgment at the step S15 (Step S15 ; no), the record signals Sr are successively detected at the detection rate Rp to generate the detection signals Sp (Step S17). Then, it is judged whether or not all the information to be reproduced are reproduced (Step S18). If the reproduction of all the information is completed (Step S18 ; yes), the decoding operation in the decoder 9 is paused (Step S21). Then, the optical pickup 2 is moved to a position on the optical disc 1 at which the encoded signal Sed encoded to start recording the record signals Sr is recorded (Step S22). After that, the operational flow proceeds to a later-described step S27. Even during the execution of the process at the step S17, it continues to input the information signal Sin and accumulate the compressed information signals Spd in the record buffer memory 5 associated with the input.

As for a record position of a new record signal Sr at the steps S11 and S12, it may be recorded in succession on an area on the optical disc 1 except the areas at which the existing record signals Sr are recorded. Or, the new record signal Sr may be recorded so as to be overwritten on the area at which the record signal Sr after the completion of the reproduction is recorded. In the latter case, since a non-recorded new area is not used in the latter case, it is possible to effectively utilize recordable areas on the optical disc 1.

Next, the operation when the simultaneous reproduction is commanded while the recording operation is originally carried out will be described below.

In the information recording and reproducing apparatus S, when the operation of recording an information on the optical disc 1 is commanded, the A/D conversion and the compressing process are firstly performed on an information signal Sin to be recorded, at the speed corresponding to the input rate Mr. Compressed information signals Spd are accumulated in the record buffer memory 5. Also, it is read out at the speed corresponding to the record rate Rr. Then, the encoder 6 starts the encoding operation (Step S25).

A position on the optical disc 1 at which a record signal Sr to be recorded is recorded is searched. A light spot of a light beam B is moved to the searched position. Then, the record signal Sr is recorded at the record rate Rr (Step S26).

The CPU 14, in accordance with a data amount signal Smr from the record buffer memory 5, judges whether or not an accumulated data amount of the record buffer memory 5 exceeds a preset fourth predetermined amount (Step S27). If the accumulated data amount of the record buffer memory 5 does not reach the fourth predetermined amount (Step S27 ; no), the operation of recording the record signals Sr is transiently paused in the optical pickup 2 (Step S28), in order to wait for the accumulated data amount to reach the fourth predetermined amount. Then, the operational flow proceeds to the step S30. Even at this time, it continues to input the information signal Sin and accumulate the compressed information signals Spd in the record buffer memory 5 associated with the input.

On the other hand, if the accumulated data amount of the record buffer memory 5 exceeds the fourth predetermined amount in the judgement at the step S27 (Step S27 ; yes), an encoded signal Sed (i.e., the record signal Sr) having a preset fifth predetermined amount is then recorded onto the optical disc 1 through the optical pickup 2 at the record rate Rr (Step S29).

At this time, if the fourth predetermined amount is a data amount equal to or less than the second predetermined amount, the fourth predetermined amount may be any data amount. Also, if the fifth predetermined amount is a data amount equal to or less than the third predetermined amount, the fifth predetermined amount may be any data amount.

Then, the CPU 14 judges whether or not the information reproduction during the record is commanded through the operation unit 16 (Step S30).

If the information reproduction during the record is not commanded (Step S30 ; no), it is then judged whether or not all the information to be recorded are recorded (Step S31). If the record of all the information is completed (Step S31 ; yes), the encoding operation is paused in the encoder 6 (Step S32), and the information recording process is ended.

On the other hand, if the recording operation is not completed in the judgment at the step S31 (Step S31 ; no), the operational flow returns back to the step S27. Then, the above-mentioned information recording process is repeated.

If the information reproduction during the record is commanded in the judgment at the step S30 (Step S30 ; yes), the operation of recording the record signals Sr until that time is transiently paused in the optical pickup 2 (even after this pause, the CPU 14 controls the A/D converter 3 and the compressing circuit 4 so as to continue to perform the A/D conversion and the compressing process on the information signal Sin, and the generated compressed information signals Spd continue to be accumulated in the record buffer memory 5 at the input rate Mr). A position on the optical disc 1 at which a record signal Sr to be next reproduced is recorded is searched. The light spot of the light beam B is moved to the searched position. Then, the generation of the detection signals Sp is started at the detection rate Rp (Step S33). After that, the decoder 9 starts decoding the generated detection signals Sp (Step S34). When this decoding operation is started, the decoded signals Sdd are accumulated in the reproduction buffer memory 10 at the speed corresponding to the detection rate Rp.

After that, the operational flow proceeds to the step S10. While the accumulated data amounts in the record buffer memory 5 and the reproduction buffer memory 10 are respectively monitored, the processes at the steps S10 to S22 are executed to accordingly carry out the information reproduction during the information record.

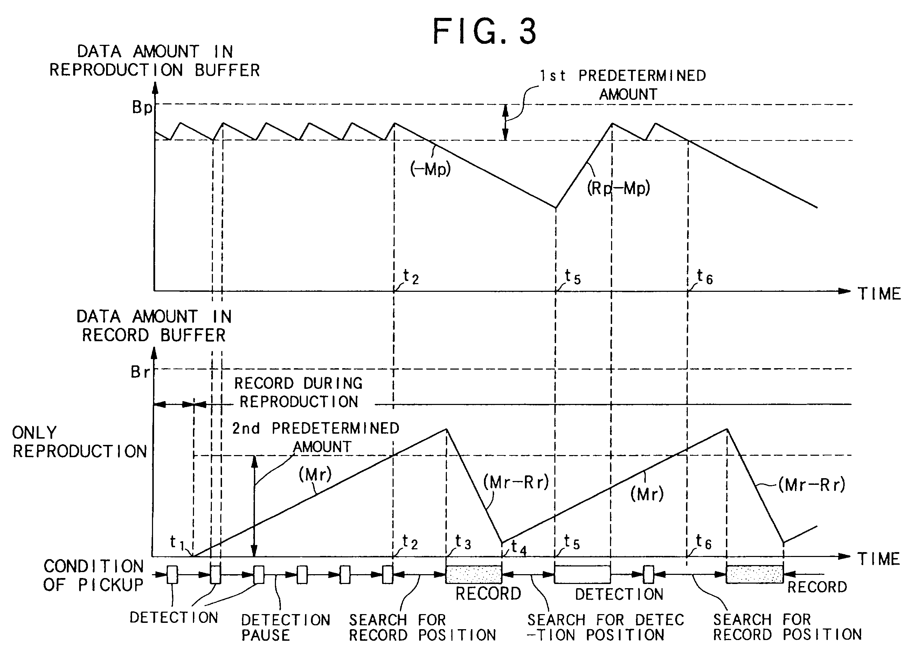

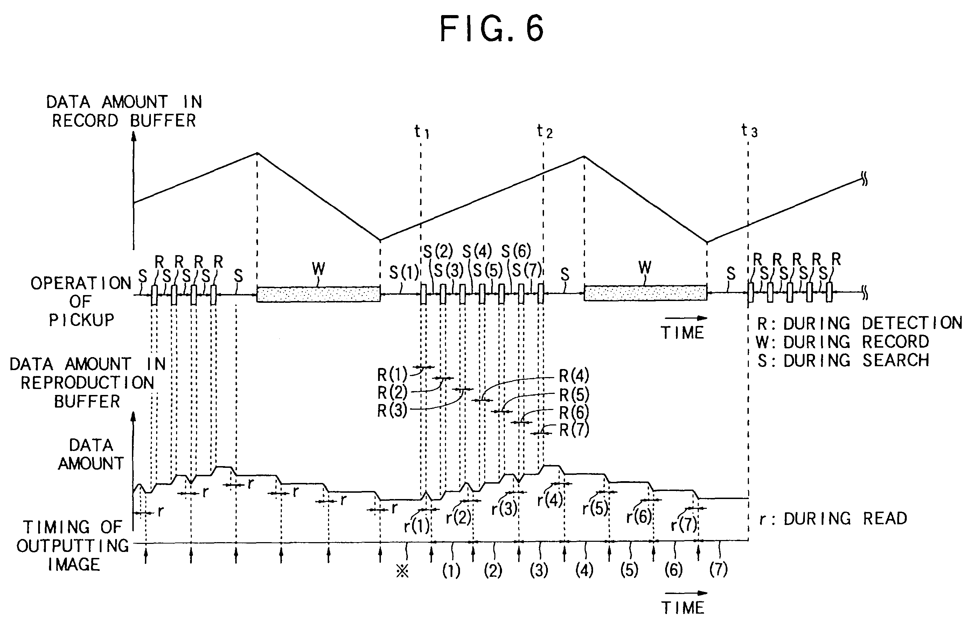

The information reproduction and the information record described with reference to FIG.2 will be described below with reference to FIG.3, mainly as for the changes of the accumulated data amounts in the record buffer memory 5 and the reproduction buffer memory 10. FIG.3 shows the changes of the respective accumulated data amounts when the information record is commanded during the information reproduction. Moreover, in the figures representing the conditions of the optical pickup 2 in FIG.3 and FIG.6 described later, the detection signals Sp are detected in a period band represented by a void area, and the record signals Sr are detected in a period band represented by a half-tone dot meshing area.

In FIG.3, when only the information reproduction is executed, the accumulated data amount of the reproduction buffer memory 10 (whose capacity is Bp) is changed such that its empty capacity belongs to a range of a data amount equal to or less than the minimum decode unit, by the processes at the steps S1 to S8. That is, when the empty capacity exceeds the first predetermined amount, the detection of the record signals Sr is started (at the detection rate Rp) such that the capacity of the reproduction buffer memory 10 is increased at a rate R represented as following.

$$R = (\text{Detection Rate } Rp) - (\text{Output Rate } Mp) \quad (1)$$

After that, the detection of the record signals Sr is paused when the empty capacity becomes below a preset predetermined amount smaller than the first predetermined amount. Then, only the output of the output signals Sout at the output rate Mp is repeated.

If the information record during the reproduction is commanded at a time tl (refer to the step S6), the accumulation of the compressed information signals Spd in the record buffer memory 5 is started at the input rate Mr (refer to the step S9) to also monitor the accumulated data amount in the record buffer memory 5 (refer to the step S10). The operation of detecting the detection signals Sp until that time is transiently paused at a time t2 when the accumulated data amount becomes equal to the second predetermined amount. A record position of a new record signal Sr is searched to then start recording the record signals Sr from a time t3 (refer to the steps S11, S12). Even at this time, the decoded signals Sdd continue to be outputted from the reproduction buffer memory 10.

If the record of the record signals Sr of the third predetermined amount is ended at a time t4, the optical pickup 2 is moved to a next detection position in order to again detect the detection signals Sp (refer to the step S14). Then, the detection signals Sp are detected from a time t5 to a time until the accumulated data amount in the record buffer memory 5 exceeds the second predetermined amount (namely, until a time t6).

After the accumulated data amount in the record buffer memory 5 exceeds the second predetermined amount, the optical pickup 2 is moved to the record position, and the record signals Sr are recorded (refer to the steps S11, S12).

After that, the above-mentioned operations are repeated until all the information signals Sin to be recorded are recorded.

At this time, as for the accumulated data amounts in the respective buffer memories, the accumulated data amount in the reproduction buffer memory 10 is decreased at the output rate Mp in the period while the optical pickup 2 is moved to the record position, the record signals Sr are actually recorded and the optical pickup 2 is moved to the detection position (namely, the period from the time t2 to the time t5). The accumulated data amount is increased at the rate R when the detection of the record signals Sr is resumed. Then, the decrease and the increase are repeated.

On the other hand, the accumulated data amount of the record buffer memory 5 is increased at the input rate Mr in the period until the completion of the movement of the optical pickup 2 to the record position after the command of the information record during the reproduction (namely, the period from the time tl to the time t3). Next, when the record signals Sr are actually recorded, the accumulated data amount is decreased at a rate R' represented as following.

$$R' = (\text{Input Rate } Mr) - (\text{Record Rate } Rr) \quad (2)$$

When the process of detecting the detection signals Sp is resumed, the accumulated data amount is again increased at the input rate Mr since the input of the information signal Sin is continued. After that, this change is repeated.

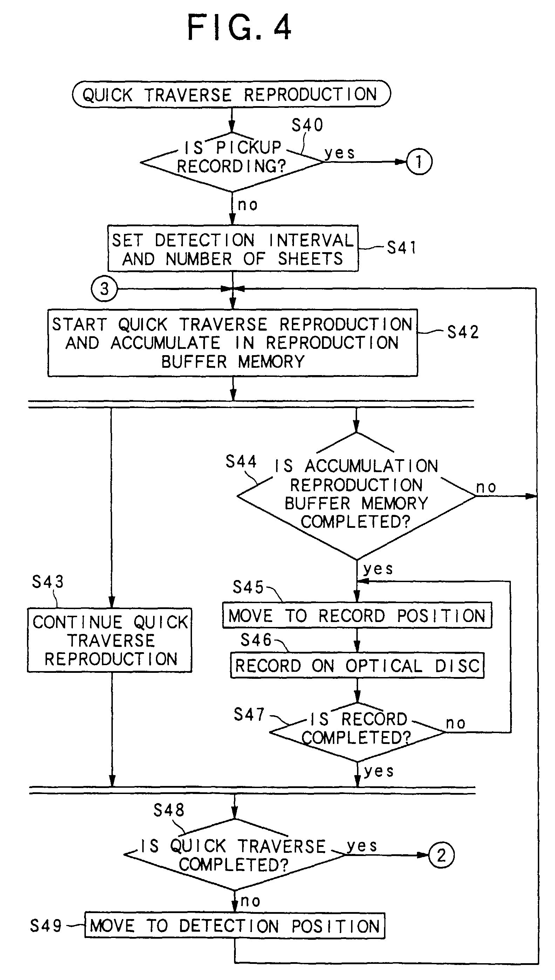

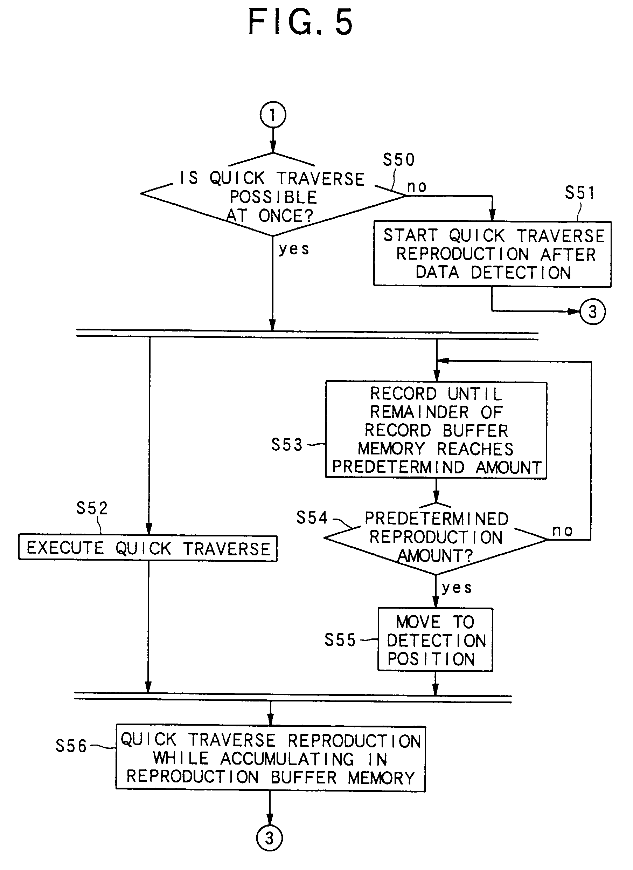

The operations when a request of carrying out a quick traverse reproduction (a so-called manual scan reproduction) is commanded by the operation unit 16 during the execution at the above-mentioned simultaneous record and reproduction mode (the steps S10 to S18 in FIG.2) will be described below with reference to FIGs.4 to 6. FIGs.4 and 5 are flowcharts showing the operations at a time of the quick traverse reproduction. FIG.6 is a timing chart respectively showing the changes of the data amounts in the respective buffer memories at the time of the quick traverse reproduction, the operation of the optical pickup 2, and the timing when an image is reproduced and outputted.

Here, the quick traverse reproduction in this embodiment implies a reproducing method which intermittently detects successive video information recorded on the optical disc 1, for each video information that is arranged at a constant interval (for example, 0.5 seconds) on a reproduction time axis of the video information, and successively reproduces the detected discontinuous video information.

As shown in FIG.4, in the quick traverse reproduction of the embodiment, when the quick traverse reproduction is commanded during the operation of the information recording and reproducing apparatus S at the simultaneous record and reproduction mode, it is firstly judged whether or not the optical pickup 2 is actually recording the record signals Sr onto the optical disc 1 at this time (Step S40).

If the recording operation is actually being carried out (Step S40 ; yes), the operational flow proceeds to the flowchart shown in FIG.5. If it is not carried out (Step S40 ; no), a detection interval (temporal interval) when the video information on the optical disc 1 is intermittently detected, and the number of sheets of the video information to be detected at one time are set (Step S41). At this step S41, video information corresponding to an image corresponding to one frame at the time of the reproduction is set as the video information of one sheet.

Here, in the process at the step S41, actually, a period that can be used for successively detecting a collection of video information is firstly calculated from the record rate Rr and a current accumulation amount in the record buffer memory 5. Next, the number of sheets of video information that can be detected from the optical disc 1 as the collection of video information and its detection interval are calculated from the calculated period and the detection rate Rp. Here, if the number of sheets and the detection interval are set, the number of sheets of video information that can be reproduced and outputted as an output signal Sout and an output continuation period per sheet can be calculated until the record signals Sr are recorded after the detection of the collection of video information, the optical pickup 2 is moved to a detection position of a next collection of video information and then the detection of video information is resumed.

More actually, for example, in FIGs.2 and 3, assuming that a period which can be used for detecting the collection of video information while the recording and reproducing operations are simultaneously carried out is 3 seconds and that a period required to search and detect a sheet of video information is 0.5 seconds (this period can be roughly calculated from the detection rate Rp), it is understood that as the collection of video information, a total of six sheets of video information can be intermittently detected and then stored in the reproduction buffer memory 10. Accordingly, assuming that 5 seconds are required until the record signals Sr are recorded after the detection of the six sheets of video information, the optical pickup 2 is moved to a detection position of a next collection of video information and then the detection of its video information is resumed. Thus, the output continuation period per sheet in the detected six sheets of video information is approximately 0.83 seconds (five seconds/six sheets ≒ 0.83 seconds).

When the detection interval and the number of detection sheets are set at the step S41, a collection of discontinuous video information is detected from the optical disc 1 under the set detection interval and the number of detection sheets, and sequentially accumulated in the reproduction buffer memory 10. Also, the detected discontinuous video information is successively reproduced and outputted while the output continuation period per sheet calculated at the step S41 is maintained. Accordingly, the quick traverse reproduction is started (Step S42).

While the quick traverse reproduction is continued (Step S43), on the other hand, it is judged whether or not the accumulation in the reproduction buffer memory 10 is completed, in accordance with the data amount signal Smp (Step S44). If the accumulation is not completed (Step S44 ; no), the operational flow returns back to the step S42, and the accumulation of the data is continued. On the other hand, if the accumulation is completed (Step S44 ; yes), the operation of detecting the video information is paused. Then, in order to start recording the record signals Sr accumulated in the record buffer memory 5 on the optical disc 1, the optical pickup 2 is moved to the record position (Step S45). The record signals Sr are recorded by using the method shown in FIGs.2 and 3 (Step S46).

Whether or not the record of the necessary amount of the record signals Sr is completed is judged in accordance with the data amount signal Smr (Step S47). If the record is not completed (Step S47 ; no), the operational flow returns back to the step S45 as it is, and the recording operation is continued. On the other hand, if the record is completed (Step S47 ; yes), it is then judged whether or not a command of ending the quick traverse reproduction is indicated by the operation unit 16 (Step S48). If the command is indicated (Step S48 ; yes), the operational flow proceeds to the step S9 of FIG.2, in order to return back to the normal operation. If the command of ending the quick traverse reproduction is not indicated (Step S48 ; no), it is judged that the quick traverse reproduction is continued as it is, and the optical pickup 2 is moved to a detection position of a next collection of discontinuous video information (Step S49). The operational flow returns back to the step S42. After that, the above-mentioned operations are repeated.

The operation when the optical pickup 2 is actually recording the record signals Sr if the quick traverse reproduction is commanded by the operation unit 16, in the judgement at the step S40, will be described below with reference to FIG.5.

As shown in FIG.5, when the optical pickup 2 is carrying out the recording operation, it is firstly judged whether or not the operational flow can proceed to the quick traverse reproduction at once, in accordance with the accumulation amounts in the record buffer memory 5 and the reproduction buffer memory 10, the record rate Rr and the detection rate Rp (Step S50).

More actually as for the operation at this step S50, for example, if the accumulation amount of the record buffer memory 5 when the quick traverse reproduction is commanded by the operation unit 16 is equal to or less than a preset predetermined amount, it is expected that the record buffer memory 5 is never overflowed and also the accumulation amount of the reproduction buffer memory 10 is small. Thus, it is judged that the operational flow proceeds to the quick traverse reproduction as it is. Moreover, as another example, whether or not the operational flow can proceed to the quick traverse reproduction at once can be judged by judging whether or not the accumulation amount of the reproduction buffer memory 10 when the quick traverse reproduction is commanded by the operation unit 16 is an accumulation amount by which the quick traverse reproduction (Step S52) can be continued while the record signals Sr are recorded (Step S53) as described later and the optical pickup 2 is moved (Step S55).

If the quick traverse reproduction can be carried out at once in the judgment at the step S50 (Step S50 ; yes), while the decoded signal Sdds accumulated in the reproduction buffer memory 10 until that time are used to carry out the quick traverse reproduction (Step S52), the record signals Sr continue to be recorded on the optical disc 1 (Step S53) until the accumulation amount of the compressed information signals Spd in the record buffer memory 5 becomes a preset predetermined minimum accumulation amount of the record buffer memory 5, on the other hand.

Then, it is judged whether or not the accumulation amount in the record buffer memory 5 becomes the predetermined minimum accumulation amount (Step S54). If it does not become the predetermined minimum accumulation amount (Step S54 ; no), the operational flow returns back to the step S53, and the recording operation is continued. If it becomes the predetermined minimum accumulation amount (Step S54 ; yes), in order to prepare for the operation of the quick traverse reproduction, the optical pickup 2 is moved to a detection position of an video information on the optical disc 1 associated with the operation of the quick traverse reproduction (Step S55). While the video information is detected from that position, the quick traverse reproduction is continued. Then, the operational flow proceeds to the step S42 shown in FIG.4.

In the quick traverse reproduction at the step S43, the quick traverse reproduction is executed by intermittently reading out the successive data signals Sdd accumulated in the reproduction buffer memory 10 before the command of the quick traverse reproduction, and successively reproducing and outputting the read out discontinuous data signals Sdd. On the other hand, the quick traverse reproduction after the step S56 is executed by successively reproducing the discontinuous video information accumulated in the reproduction buffer memory 10 after the intermittent detection, similarly to the step S43 of FIG.2.

Next, the quick traverse reproduction at the steps S42, S43 and S56 in FIGs.4 and 5 will be described below with reference to FIG.6, mainly as for the changes of the accumulated data amounts in the record buffer memory 5 and the reproduction buffer memory 10. FIG.6 is a timing chart showing the relation between the changes of the data accumulation amounts in the respective buffer memories during the quick traverse reproduction, the operations of the optical pickup 2 at respective timings and output timings (represented by upward arrows in a bottom stage of FIG.6) of an video information for each sheet.

According to the operations shown in FIGs.4 and 5, as shown in FIG.6, in a period when the recording operation is not performed on the optical disc 1 while the compressed information signals Spd are accumulated in the record buffer memory 5, the accumulation amount in the record buffer memory 5 is increased, and also the optical pickup 2 intermittently detects the video information from on the optical disc 1.

The detected video information is reproduced and outputted in parallel to the intermittent detection. Also, after the optical pickup 2 starts recording the record signals Sr on the optical disc 1, the video information accumulated in the reproduction buffer memory 10 is used to successively reproduce and output it. Then, the quick traverse reproduction is continued.

Then, a period from a time 1 to a time t3 in FIG. 6 will be described below with regard to the detailed processes of the quick traverse reproduction. In the period, the video information to be reproduced and outputted are illustrated as (1), (2) to (7) in their output order. Moreover in FIG.6, for example, S(1) denotes a period when a first video information is searched on the optical disc 1, R(1) denotes a period when the first video information is actually detected from the optical disc 1 and accumulated in the reproduction buffer memory 10, and r(1) denotes a period when the first video information is read out from the reproduction buffer memory 10 and demodulated. Here, the number of sheets of video information which can be detected and searched from the time tl to the time t2 is set at the step S41 of FIG.4.

In the process of the quick traverse reproduction shown in FIG.6, when the operation of recording the record signals Sr on the optical disc 1 is transiently completed, the optical disc 1 is searched in order to detect a sheet of video information which is firstly reproduced and outputted (refer to the step S42 of FIG.4 and the symbol S(1) of FIG.6). In addition, until the completion of the search, the quick traverse reproduction is carried out by using the video information accumulated in the reproduction buffer memory 10 in the operation of detecting the video information at a previous time (refer to a symbol ※ of FIG.6).

When the search of the first video information is completed, the first video information is detected from the searched position on the optical disc 1 (refer to the symbol R(1) of FIG.6). Then, it is accumulated in the reproduction buffer memory 10 (refer to the step S42 of FIG.4).

The search of a second video information is started immediately after the detection of the first video information (refer to a symbol (2) of FIG.6). Also, the first video information is read out from the reproduction buffer memory 10 and demodulated (refer to the symbol r(1) of FIG.6). Image corresponding to the first video information is outputted immediately after the demodulation (refer to a symbol (1) in the bottom stage of FIG.6).

On the other hand, when the search of the second video information is completed, the second video information is detected from the searched position on the optical disc 1 (refer to a symbol R(2) of FIG.6). It is accumulated in the reproduction buffer memory 10, and read out and demodulated until the completion of the output of the image corresponding to the first video information (refer to a symbol r(2) of FIG.6). The output of image corresponding to the second video information is started immediately after the completion of the output of the image corresponding to the first video information (refer to a symbol (2) in the bottom stage of FIG.6). At this time, the search of a third video information is started immediately after the detection of the second video information (refer to a symbol S(3) of FIG.6).

After that, the above-mentioned operations are repeated as shown in FIG.6. at a time of the completion of the detection of a seventh video information (refer to a symbol R(7) of FIG.6), the optical pickup 2 is moved to a next record start position. The record signals Sr are resumed to be recorded on the optical disc 1 (refer to the step S45 of FIG.4).

At this time, the respective video information ((1) to (7)) respectively detected until the time t2 when the detection of the seventh video information is completed continue to be sequentially read out from the reproduction buffer memory 10 and demodulated and outputted until the time t3 when the detection of a next video information from the optical disc 1 is resumed. In the demodulation and the output, an output continuation period per sheet of video information is determined in accordance with the set result at the step S41 of FIG.4.

As mentioned above, according to the information recording and reproducing apparatus S in the embodiment, record signals Sr recorded on the optical disc 1 until that time are reproduced while information from external portion continues to be inputted. Also, non-recorded record signals Sr are recorded while the detected record signals Sr continue to be outputted to the external portion. Thus, when the information recording and reproducing apparatus S is considered as a whole, the operation of recording information and the operation of reproducing information recorded until that time can be apparently carried out at the same time.

The record signals Sr recorded until that time are detected while the compressed information signals Spd are stored in the record buffer memory 5. Also, the non-recorded record signals Sr are recorded while the decoded signals Sdd are read out from the reproduction buffer memory 10. Hence, the simple configuration can be used to simultaneously carry out the information record and the information reproduction.

Moreover, a plurality of video information are intermittently detected from on the optical disc 1. The plurality of detected video information are mutually successively reproduced in order along the reproduction time axis. Thus, while the information record and the information reproduction are apparently carried out at the same time, the quick traverse reproduction can be executed by the intermittent reproduction of the video information.

In the above-mentioned embodiment, the case is described in which the optical disc 1 is used as the record medium. However, other than this case, it may be applied to, for example, a semiconductor memory, a hard disc and the like, if both operations of reading and writing information are possible and random access is possible in a record medium.

In the above-mentioned embodiment, whether the actual operation of the optical pickup 2 is the recording operation or the reproducing operation is judged to thereby determine the later control method (Step S40). Other than this, it may be generally judged from the judgment as to whether the actual operation of the optical pickup 2 is the recording operation or the reproducing operation, the respective accumulation amounts in the record buffer memory 5 and the reproduction buffer memory 10, the record rate Rr and the detection rate Rp.

Moreover, during the execution of the quick traverse reproduction during the simultaneously recording and reproducing operation, as for the judgment from the accumulation amounts of the record buffer memory 5 and the reproduction buffer memory 10, the record rate Rr and the detection rate Rp, the repetition of the reconsideration of its judgment at a preset predetermined timing enables the optimal quick traverse reproduction during the simultaneously recording and reproducing operation.

Furthermore, information of positions (its address information or a radius position) on the optical disc 1 where information is recorded and reproduced are respectively detected, and the times required to respectively search the positions are expected in advance. Then, they may be added to the judgment conditions to determine the above-mentioned control method.

In the above-mentioned embodiment, the case is described in which the present invention is applied to the operation of recording and reproducing an information on which the compressing process and the expanding process are performed. However, other than that case, the present invention may be widely applied to an information recording and reproducing apparatus, if it records and reproduces an information in which an input rate of an information from external portion is lower than a record rate to a record medium of the information and further a detection rate of an information from a record medium is higher than an output rate of the information to the external portion.

## Claims

1. An information recording and reproducing apparatus (S) characterized in that said information recording and reproducing apparatus comprises:

   an information recording device (R) for processing information inputted from an external portion at a predetermined input rate, which is set in advance, to thereby generate record information and for recording the generated record information onto a record medium (1) at a record rate higher than the input rate;
   an information reproducing device (P) for detecting the record information recorded on said record medium at a predetermined detection rate, which is set in advance, for reprocessing the detected record information to thereby reproduce the record information, and for outputting the reprocessed record information to the external portion at an output rate lower than the detection rate; and
   a controller (14) for respectively controlling said information recording device and said information reproducing device such that, in a time duration during which the record information is not recorded and which is caused by a difference between the record rate and the input rate, the record information already recorded on said record medium until a present time is reproduced while the information from the external portion is continued to be inputted, and such that, in a time duration during which the record information is not detected and which is caused by a difference between the detection rate and the output rate, the record information which is not recorded yet is recorded onto said record medium while the reprocessed record information is continued to be outputted to the external portion,
   said controller controlling said information reproducing device to detect a plurality of partial record information, each of which is a part of the record information recorded on said record medium and which are discontinuous to each other in the record information, and reproduce the plurality of detected partial record information continuously to each other in an order along a time axis in the record information.

2. An apparatus (S) according to Claim 1, characterized in that
   said information recording device (R) comprises:

   a processing device (4) for processing the information inputted at the input rate to thereby generate the record information;
   a record information memory (5) for temporarily storing the generated record information; and
   a recording device (2) for reading out the stored record information and recording the read out record information onto said record medium at the record rate,
   said controller (14) controlling said information recording device to continue receiving the information from the external portion and controlling said information reproducing device to detect the plurality of partial record information already recorded on said record medium until a present time and to continuously reproduce the plurality of detected partial record information, in a time duration during which the record information is stored in said record information memory and the record information is not recorded onto said record medium.

3. An apparatus (S) according to Claim 1, characterized in that said information reproducing device (P) comprises:

   a detecting device (2) for detecting the partial record information at the detection rate from said record medium;
   a partial-record information memory (10) for temporarily storing the detected partial record information; and
   a reprocessing device (11) for reading out the stored partial record information and reprocessing the read out partial record information to thereby reproduce the record information and for outputting the reprocessed record information to the external portion at the output rate,
   said controller (14) controlling said information reproducing device to continue outputting the reprocessed record information to the external portion and controlling said information recording device to record the record information not recorded yet onto said record medium, in a time duration during which the partial record information is read out from said partial-record information memory and is reprocessed to be thereby continuously reproduced and a detection of the partial record information from said record medium is not performed.

4. An apparatus (S) according to Claim 1, characterized in that said controller (14) controls said information reproducing device (P) by setting the number and a detection interval of the partial record information to be detected on the basis of the record rate and the detection rate.

5. An apparatus (S) according to Claim 2, characterized in that said controller (14) controls said information reproducing device (P) by setting the number and a detection interval of the partial record information to be detected on the basis of the record rate, the detection rate and a storage amount of the record information in said record information memory (5).

6. An apparatus according to Claim 3, characterized in that said controller (14) controls said information reproducing device (P) by setting the number and a detection interval of the partial record information to be detected on the basis of the record rate, the detection rate and a storage amount of the partial record information in said partial-record information memory (10).

7. An information recording and reproducing method characterized in that said information recording and reproducing method comprises:

an information recording process of processing information inputted from an external portion at a predetermined input rate, which is set in advance, to thereby generate record information and of recording the generated record information onto a record medium (1) at a record rate higher than the input rate;
an information reproducing process of detecting the record information recorded on said record medium at a predetermined detection rate, which is set in advance, of reprocessing the detected record information to thereby reproduce the record information, and of outputting the reprocessed record information to the external portion at an output rate lower than the detection rate; and
a controlling process of respectively controlling said information recording process and said information reproducing process such that, in a time duration during which the record information is not recorded and which is caused by a difference between the record rate and the input rate, the record information already recorded on said record medium until a present time is reproduced while the information from the external portion is continued to be inputted, and such that, in a time duration during which the record information is not detected and which is caused by a difference between the detection rate and the output rate, the record information which is not recorded yet is recorded onto said record medium while the reprocessed record information is continued to be outputted to the external portion,
said controlling process controlling said information reproducing process to detect a plurality of partial record information, each of which is a part of the record information recorded on said record medium and which are discontinuous to each other in the record information, and reproduce the plurality of detected partial record information continuously to each other in an order along a time axis in the record information.

8. A method according to Claim 7, characterized in that said information recording process comprises:

a processing process of processing the information inputted at the input rate to thereby generate the record information;
a record information storing process of temporarily storing the generated record information; and
a recording process of reading out the stored record information and recording the read out record information onto said record medium at the record rate,
said controlling process controlling said information recording process to continue receiving the information from the external portion and controlling said information reproducing process to detect the plurality of partial record information already recorded on said record medium until a present time and to continuously reproduce the plurality of detected partial record information, in a time duration during which the record information is stored by said record information storing process and the record information is not recorded onto said record medium.

9. A method according to Claim 7, characterized in that said information reproducing process comprises:

a detecting process of detecting the partial record information at the detection rate from said record medium;
a partial-record information storing process of temporarily storing the detected partial record information; and

a reprocessing process of reading out the stored partial record information and reprocessing the read out partial record information to thereby reproduce the record information and of outputting the reprocessed record information to the external portion at the output rate, said controlling process controlling said information reproducing process to continue outputting the reprocessed record information to the external portion and controlling said information recording process to record the record information not recorded yet onto said record medium, in a time duration during which the partial record information is read out by said partial-record information storing process and is reprocessed to be thereby continuously reproduced and a detection of the partial record information from said record medium is not performed.

10. A method according to Claim 7, characterized in that said controlling process controls said information reproducing process by setting the number and a detection interval of the partial record information to be detected on the basis of the record rate and the detection rate.

11. A method according to Claim 8, characterized in that said controlling process controls said information reproducing process by setting the number and a detection interval of the partial record information to be detected on the basis of the record rate, the detection rate and a storage amount of the record information by said record information storing process.

12. A method according to Claim 9, characterized in that said controlling process controls said information reproducing process by setting the number and a detection interval of the partial record information to be detected on the basis of the record rate, the detection rate and a storage amount of the partial record information by said partial-record information storing process.

# FIG. 1

EP 1 026 890 A2

# FIG. 2

# FIG. 3

DATA AMOUNT IN REPRODUCTION BUFFER

1st PREDETERMINED AMOUNT

$Bp$

$(-Mp)$

$(Rp-Mp)$

$t_2$   $t_5$   $t_6$   TIME

DATA AMOUNT IN RECORD BUFFER

$Br$

RECORD DURING REPRODUCTION

ONLY REPRODUCTION

2nd PREDETERMINED AMOUNT

$(Mr)$   $(Mr-Rr)$   $(Mr)$   $(Mr-Rr)$

$t_1$   $t_2$   $t_3$   $t_4$   $t_5$   $t_6$   TIME

CONDITION OF PICKUP

RECORD   DETECTION   RECORD

DETECTION   DETECTION PAUSE   SEARCH FOR RECORD POSITION   SEARCH FOR DETEC-TION POSITION   SEARCH FOR RECORD POSITION

EP 1 026 890 A2

EP 1 026 890 A2

# FIG. 4

QUICK TRAVERSE REPRODUCTION

IS PICKUP RECORDING? — S40 — yes → ①

no

SET DETECTION INTERVAL AND NUMBER OF SHEETS — S41

③

START QUICK TRAVERSE REPRODUCTION AND ACCUMULATE IN REPRODUCTION BUFFER MEMORY — S42

S44 — IS ACCUMULATION REPRODUCTION BUFFER MEMORY COMPLETED? — no →

yes

S43 — CONTINUE QUICK TRAVERSE REPRODUCTION

S45 — MOVE TO RECORD POSITION

S46 — RECORD ON OPTICAL DISC

S47 — IS RECORD COMPLETED? — no

yes

S48 — IS QUICK TRAVERSE COMPLETED? — yes → ②

no

S49 — MOVE TO DETECTION POSITION

19

# FIG. 5

```
                    ( 1 )
                      │
                      ▼
         ┌────────────────────────┐  S50
         │   IS QUICK TRAVERSE     │    no
         │      POSSIBLE           ├──────────────┐
         │      AT ONCE?           │              │        S51
         └────────────────────────┘     ┌──────────────────────┐
                      │ yes             │  START QUICK TRAVERSE │
                      │                 │  REPRODUCTION AFTER   │
                      │                 │   DATA DETECTION      │
                      │                 └──────────────────────┘
                      │                            │
                      │                            ▼
                      │                          ( 3 )
                      │
         ═════════════════════════════════════════════════════
                      │                            │
                      │                            ▼
                      │              ┌──────────────────────┐
                      │              │    RECORD UNTIL       │
                      │              │    REMAINDER OF       │
                      │         S53  │   RECORD BUFFER       │
                      │              │   MEMORY REACHES      │
                      │              │ PREDETERMIND AMOUNT   │
                      │              └──────────────────────┘
                      │                            │
                      │                            ▼
         S52          │          S54  ┌──────────────────┐  no
   ┌──────────────────────────┐       │  PREDETERMINED   ├──────┐
   │ EXECUTE QUICK TRAVERSE    │       │  REPRODUCTION    │      │
   └──────────────────────────┘       │     AMOUNT?      │      │
                      │               └──────────────────┘      │
                      │                        │ yes            │
                      │                        ▼                │
                      │              ┌──────────────┐           │
                      │         S55  │   MOVE TO     │          │
                      │              │  DETECTION    │          │
                      │              │  POSITION     │          │
                      │              └──────────────┘           │
                      │                        │                │
         ═════════════════════════════════════════════════════
                      │
                      ▼
   S56  ┌────────────────────────────────────┐
        │ QUICK TRAVERSE REPRODUCTION        │
        │   WHILE ACCUMULATING IN            │
        │ REPRODUCTION BUFFER MEMORY         │
        └────────────────────────────────────┘
                      │
                      ▼
                    ( 3 )
```

# FIG. 6

EP 1 026 890 A2